# EUROPÄISCHE PATENTSCHRIFT

(11) **EP 1 386 189 B1**
(45) Veröffentlichungstag und Bekanntmachung des Hinweises auf die Patenterteilung: **11.07.2007**
(21) Anmeldenummer: 02732704.8
(22) Anmeldetag: 08.05.2002
(51) Int. Cl.: G02B 21/00, G02B 21/24

(54) **VORRICHTUNG ZUR UNTERSUCHUNG CHEMISCHER UND/ODER BIOLOGISCHER PROBEN**
DEVICE FOR EXAMINING CHEMICAL AND/OR BIOLOGICAL SAMPLES
DISPOSITIF POUR L'ANALYSE D'ECHANTILLONS CHIMIQUES OU BIOLOGIQUES

(30) Priorität: 11.05.2001 DE 10123027
(43) Veröffentlichungstag der Anmeldung: 04.02.2004
(73) Patentinhaber: Evotec AG, 22525 Hamburg (DE)
(72) Erfinder: HUMMEL, Stefan, 25489 Haseldorf (DE)
(74) Vertreter: von Kirschbaum, Albrecht
(86) Internationale Anmeldenummer: PCT/EP2002/005069
(87) Internationale Veröffentlichungsnummer: WO 2002/093232

(56) Entgegenhaltungen:
- DD-A- 221 563
- GB-A- 1 235 587
- US-A- 3 202 049
- US-A- 3 648 587
- US-A- 3 837 731
- US-A- 5 715 082
- US-A- 6 101 029
- PATENT ABSTRACTS OF JAPAN vol. 013, no. 102 (P-841), 10. März 1989 (1989-03-10) & JP 63 282654 A (HITACHI LTD), 18. November 1988 (1988-11-18)
- PATENT ABSTRACTS OF JAPAN & JP 06 208058 A (OLYMPUS OPTICAL), 26. Juli 1994 (1994-07-26)

## Beschreibung

Die Erfindung betrifft eine Vorrichtung zur Untersuchung chemischer und/oder biologischer Proben mit Hilfe optischer Einrichtungen. Es kann sich hierbei beispielsweise um ein Mikroskop, insbesondere ein konfokales Mikroskop, handeln.

Derartige Untersuchungsvorrichtungen weisen ein Objektiv zur Beobachtung der Probe auf. Wird mit Hilfe des Objektivs beispielsweise eine in einem Probenträger vorhandene Probe von unten durch einen für die entsprechende Beobachtungsstrahlung durchlässigen Probenträgerboden betrachtet, so wirkt sich die gegebene Konstellation der Brechungsindizes, insbesondere bei hochnumerischen Objektiven, ungünstig auf den Verlauf des Strahlengangs aus. Unterschiedliche Brechungsindizes treten bei den Übergängen zwischen der Austrittslinse des Objektivs und der Umgebungsluft sowie zwischen dem Boden des Probenträgers und dem zwischen dem Objektiv und dem Probenträgerboden angeordneten Medium auf.

Insbesondere bei konfokalen Mikroskopen, die im Hochdurchsatzscreening eingesetzt werden, muss ein sehr kleiner Fokus bestehen. Dies ist erforderlich, da im Hochdurchsatzscreening Proben mit geringen Volumina im µl-Bereich oder geringer untersucht werden. Da die von dem Objektiv erfasste Menge der von der Probe abgegebenen Strahlung (Einsammeleffizienz) großen Einfluss auf die Meßzeit hat, muss die Apertur des Objektivs möglichst hoch sein. Dies ist insbesondere beim Hochdurchsatz-Screening wichtig, da die Meßzeit eine der entscheidenden Parameter darstellt.

Üblicherweise wird mit Hilfe einer Pipette o.dgl. per Hand eine Immersionsflüssigkeit mit einem Brechungsindex > 1 auf die Austrittslinse des Objektivs aufgebracht. Insbesondere in Hochdurchsatzscreening-Anlagen und vollautomatisierten Mikroskopen o. Ä. ist dies äußerst aufwändig, da das Objektiv in geringem Abstand zu einem Probenträger, wie einer Titerplatte, angeordnet ist. Zum Aufbringen der Immersionsflüssigkeit muss das Objektiv nach unten zurückgefahren werden, so dass von einem Benutzer mit Hilfe einer Pipette ö.ä. Immersionsflüssigkeit auf die Austrittslinse aufgebracht werden kann. Anschließend wird das Objektiv wieder an den Probenträger herangefahren, bis der Spalt zwischen der Austrittslinse des Objektivs und der Außenfläche des Probenträgers durch Immersionsmedium gefüllt ist. Ebenso kann das Objektiv stationär sein und der Probenträger bewegt werden.

Ein weiterer Nachteil besteht darin, dass bei der Untersuchung von Proben in Titerplatten, d.h. in Probenträgern mit einer Vielzahl einzelner Proben, eine Relativbewegung zwischen dem Objektiv und der Titerplatte stattfindet, da jede einzelne Probe von dem Objektiv angefahren werden muss oder umgekehrt. Bei dieser Relativbewegung verbleibt stets ein Teil der Immersionsflüssigkeit an der Probenträgerunterseite, so dass nach der Untersuchung mehrerer Proben der Spalt zwischen der Austrittslinse des Objektivs und der Außenfläche des Probenträgers nicht mehr vollständig mit Immersionsflüssigkeit gefüllt sein kann.

Aus US 3,873,731 ist ein Mikroobjektiv bekannt, das eine Ölabgasevorrichtung aufweist. Die Ölabgasevorrichtung weist ein Gehäuse sowie eine Frontscheibe auf, durch die eine Kammer ausgebildet wird, die ringförmig um ein Frontteil des Objektivs herumgeführt ist. Über einen Einlass wird ein unter Druck stehendes Öl in die über ein Ventil verschlossene Kammer gepumpt.

Aufgabe der Erfindung ist es, das Vorsehen von Immersionsflüssigkeit bei optischen Untersuchungsvorrichtungen zu vereinfachen.

Die Lösung der Aufgabe erfolgt erfindungsgemäß durch eine Vorrichtung gemäß Patentanspruch 1.

Die erfindungsgemäße Vorrichtung zur Untersuchung chemischer und/oder biologischer Proben weist erfindungsgemäß eine Zuführeinrichtung zum automatischen Zuführen von Immersionsmedium auf. Mit Hilfe der Zuführeinrichtung kann zwischen einen Probenträger, der zur Aufnahme der Proben dient, und einer Austrittslinse eines Objektivs, das zur Beobachtung der Probe vorgesehen ist, automatisch Immersionsmedium zugeführt werden. Der Spalt zwischen Austrittslinse und Objektiv ist somit während der Beobachtung einer Probe stets mit Immersionsmedium befüllbar. Anstatt eines Probenträgers kann auch ein Mittel zur Aufnahme bzw. zum Halten des Probenträgers vorgesehen sein. Ggf. berührt das Immersionsmedium dann nicht den Probenträger selbst, sondern eine Platte des Halters o.dgl.

Da das Zuführen von Immersionsmedium mit Hilfe der Zuführeinrichtung erfindungsgemäß automatisch erfolgt, ist ein Eingreifen eines Benutzers in die Vorrichtung, insbesondere der Hochdurchsatzscreening-Anlage oder einer anderen automatisierten Vorrichtung nicht erforderlich. Vielmehr kann die Zuführeinrichtung so ausgelegt sein, dass auch ein Zurückfahren des Objektivs, d.h. ein Entfernen des Objektivs von der Außenfläche einer Probenträgerwand des Probenträges bzw. ein Bewegen des Probenträgers, nicht erforderlich ist. Es ist mit der erfindungsgemäßen Vorrichtung möglich, in der Meßposition des Objektivs, d.h. in der Position, in der sich das Objektiv auch während der Untersuchung der Probe befindet, Immersionsmedium zuzuführen.

Die erfindungsgemäße Zuführung von Immersionsmedium erfolgt vorzugsweise derart, dass zwischen dem Objektiv und der Außenfläche der Probenträgerwand ein dünner Film an Immersionsmedium ausgebildet wird. Besonders bevorzugt ist es, wenn die Spaltbreite hierbei in Abhängigkeit des verwendeten Immersionsmediums derart gewählt wird, dass das Immersionsmedium auf Grund von Kapillarkräften in den Spalt gefördert wird.

Vorzugsweise weist die Zuführeinrichtung hierzu ein mit dem Objektiv verbundenes Zuführrohr auf. Das Zuführrohr ist in dieser Ausführungsform von dem Objektiv gehalten, so dass eine Austrittsöffnung des Zuführrohrs stets eine definierte Lage bzgl. der Austrittslinse des Objektivs aufweist. Das Zuführrohr ist vorzugsweise derart angeordnet, dass eine starre Verbindung des Zuführrohrs mit dem Objektiv realisiert werden kann. Die Austrittsöffnung des Zuführrohrs ist somit außerhalb des für die Messung relevanten Strahlengangs angeordnet, so dass das Zuführrohr keinen Schatten wirft.

Die Austrittsöffnung des Zuführrohrs ist möglichst nah an der Austrittslinse angeordnet. Vorzugsweise ist der Abstand kleiner als 15 mm, insbesondere kleiner als 10 mm.

Die Querschnittsfläche der Austrittsöffnung, die vorzugsweise abgeflacht ist, ist vorzugsweise kleiner als 1 mm², insbesondere kleiner als 0,8 mm².

Um ein möglichst gleichmäßiges und blasenfreies Auftragen des Immersionsmediums auf die Austrittslinse des Objektivs zu gewährleisten, ist die Austrittsöffnung des Zuführrohrs vorzugsweise zu einem Mittelpunkt der Austrittslinse in Richtung des Objektivs versetzt angeordnet. Dies bedeutet bei einem nach oben weisenden Objektiv, dass die Austrittsöffnung des Zuführrohrs unterhalb eines Maximalpunkts der Austrittslinse angeordnet ist. Hierdurch ist ferner sichergestellt, dass das Zuführrohr den Probenträger nicht berührt.

Zur Förderung des Immersionsmediums weist die Zuführeinrichtung beispielsweise eine Pumpe auf. Bei der vorzugsweise steuerbaren Pumpe handelt es sich insbesondere um eine steuerbare Schlauchpumpe, die auf einen mit dem Zuführrohr verbundenen Schlauch einwirkt. Das Vorsehen einer Schlauchpumpe hat den Vorteil, dass keine Teile der Pumpe, insbesondere keine Metallteile, mit dem Immersionsmedium in Kontakt kommen und somit keine Beeinträchtigung des Immersionsmediums durch die Pumpe hervorgerufen wird.

Eine weitere Möglichkeit zur Zufuhr des Immersionsmediums ist das Vorsehen eines Vorratsbehälters, der über ein Fluidelement, wie einen Schlauch, mit dem Zuführrohr verbunden ist. Der Vorratsbehälter ist gegenüber der Austrittsöffnung auf einem höheren Niveau angeordnet, so dass das Immersionsmedium auf Grund der Gewichtskraft in Richtung der Austrittsöffnung strömt. Zur Steuerung der Austrittsmenge sowie der Häufigkeit des Immersionsaustritts kann in dem Fluidelement ein vorzugsweise steuerbares Ventil vorgesehen sein.

Durch eine Pumpe oder einen Vorratsbehälter, der wahlweise auch mit einer Pumpe verbunden sein kann, ist es möglich, Immersionsmedium beispielsweise zu fest vorgegebenen Zeitpunkten zuzuführen. Ebenso ist ein kontinuierliches Zuführen von Immersionsmedium möglich.

Erfindungsgemäß ist ein Objektivkopf des Objektivs von einer Auffangeinrichtung zur Aufnahme überschüssigen Immersionsmediums umgeben. Eine derartige Auffangeinrichtung ist insbesondere bei einer kontinuierlichen Immersionsmediumszufuhr vorteilhaft. Insbesondere auf Grund des geringen Spalts zwischen der Austrittslinse des Objektivs und der Außenfläche der Probenträgerwand reißt bei einer kontinuierlichen oder in vorgegebenen zeitlichen Abständen erfolgenden Immersionsmediumszufuhr der zwischen der Austrittslinse des Objektivs und der Außenfläche des Probenträgers vorgesehene Immersionsmediumsfilm nicht ab.

Vorzugsweise handelt es sich bei der Auffangeinrichtung um eine vorzugsweise den gesamten Objektivkopf umgebenden Auffangrinne. Diese kann derart ausgebildet sein, dass sie an ihrem inneren Rand eine Dichtlippe o.dgl. aufweist, so dass die Auffangrinne auf herkömmliche Objektivköpfe aufgesteckt werden kann.

Um insbesondere lange Untersuchungsreihen in Hochdurchsatzscreening-Anlagen durchführen zu können, weist die Auffangeinrichtung eine Abführöffnung auf, über die flüssiges Immersionsmedium aus der Auffangeinrichtung abgeführt werden kann. Durch die Abführöffnung kann das Immersionsmedium beispielsweise ablaufen. Vorzugsweise ist die Abführöffnung mit einer Absaugeinrichtung zum Absaugen des überflüssigen Immersionsmediums verbunden.

Der zwischen der Austrittslinse des Objektivs und der Außenfläche der Probenträgerwand vorgesehene Spalt weist bei Hochdurchsatzscreening-Verfahren vorzugsweise weniger als 1000 µm, insbesondere weniger als 500 µm, und besonders bevorzugt weniger als 200 µm, auf. Bei einer derart geringen Spaltbreite ist ein Abreißen des Immersionsmediums bei kontinuierlicher Immersionsmediumszufuhr vermieden. Ferner reißt das Medium bei einer Relativbewegung zwischen dem Objektiv und dem Probenträger nicht ab, sofern eine ausreichende Menge Immersionsmedium nachgeführt wird. Auf Grund der bei einem derart schmalen Spalt auftretenden Kapillarkräfte ist es auch möglich, die vorstehend beschriebene Vorrichtung derart anzuordnen, dass das Objektiv nach unten weist.

Die vorstehend beschriebene Vorrichtung ist insbesondere zur Verwendung in konfokalen Mikroskopen geeignet.

Die Erfindung eignet sich für ein Verfahren zur Untersuchung chemischer und/oder biologischer Proben, wobei es sich hierbei insbesondere um ein optisches Untersuchungsverfahren handelt. Gemäß des Verfahrens wird ein eine Probe aufnehmender Probenträger relativ zu einem Objektiv angeordnet. Die Anordnung erfolgt derart, dass zwischen einer Außenfläche einer Probenträgerwand und einer Austrittslinse des Objektivs ein Spalt ausgebildet ist. Sofern das Objektiv unterhalb des Probenträgers angeordnet ist, verläuft der Spalt somit zwischen einer Unterseite eines Probenträgerbodens und der Austrittslinse. Anschließend wird das Immersionsmedium automatisch in den Spalt zugeführt. Durch das automatische Zuführen ist das Verfahren insbesondere bei kontinuierlichen Untersuchungsverfahren vorteilhaft. Insbesondere bei Hochdurchsatzscreening-Verfahren, bei denen eine Vielzahl von Proben in kurzen Zeitabständen gemessen werden müssen, weist das Verfahren erhebliche Zeitersparnis sowie ein deutliche Verbesserung der Untersuchungsergebnisse auf.

Vorzugsweise wird das Immersionsmedium über eine steuerbare Zuführeinrichtung in den Spalt zugeführt. Hierbei kann es sich um eine kontinuierliche, in regelmäßigen Abständen erfolgende oder um eine rein bedarfsbezogene Zuführung von Immersionsmedium handeln.

Der Brechungsindex des Immersionsmediums ist vorzugsweise > 1, insbesondere > 1,3, um eine numerischer Apertur des Objektivs von > 1 erreichen zu können. Hierdurch kann ein äußerst kleiner Fokus realisiert werden, der zu einer großen Auflösung notwendig ist.

Als Immersionsmedium wird vorzugsweise Wasser oder Öl verwendet.

Das Verfahren weist vorzugsweise zusätzlich den Schritt auf, dass das überschüssige Immersionsmedium abgeführt wird.

Ferner ist es vorteilhaft, vor dem Zuführen des Immersionsmediums eine Reinigungsflüssigkeit in den Spalt zu leiten. Hierdurch kann die Außenlinse des Objektivs sowie der Probenträgerboden gereinigt werden. Als Reinigungsflüssigkeit kann beispielsweise Alkohol verwendet werden. Ferner ist es möglich, unterschiedliche Immersionsmedien zu verwenden und vor dem Zuführen eines neuen Immersionsmediums durch das Zuführen von Reinigungsflüssigkeit die Austrittslinse des Objektivs sowie die Außenfläche der Probenträgerwand zu reinigen. Um ein derartiges Vorgehen zu beschleunigen, ist es möglich, mehrere Zuführeinrichtungen vorzusehen, wobei durch eine Zuführeinrichtung beispielsweise ein erstes Immersionsmedium, durch eine zweite Zuführeinrichtung eine Reinigungsflüssigkeit und durch eine dritte Zuführeinrichtung ein zweites Immersionsmedium zugeführt werden kann.

Ferner ist es möglich, eine Rückkopplung zwischen der der Austrittslinse zugeführten und abgeführten Mengen Immersionsmedium vorzusehen. Hierdurch kann die Menge an benötigtem Immersionsmedium überwacht werden. Zur Steuerung der der Austrittslinse zugeführten Menge an Immersionsmedium sowie der abgeführten Menge an Immersionsmedium kann in der Zuleitung und/oder der Ableitung ein Ventil vorgesehen sein.

Nachfolgend wird die Erfindung anhand einer bevorzugten Ausführungsform unter Bezugnahme auf die anliegenden Zeichnungen näher erläutert. Es zeigen:

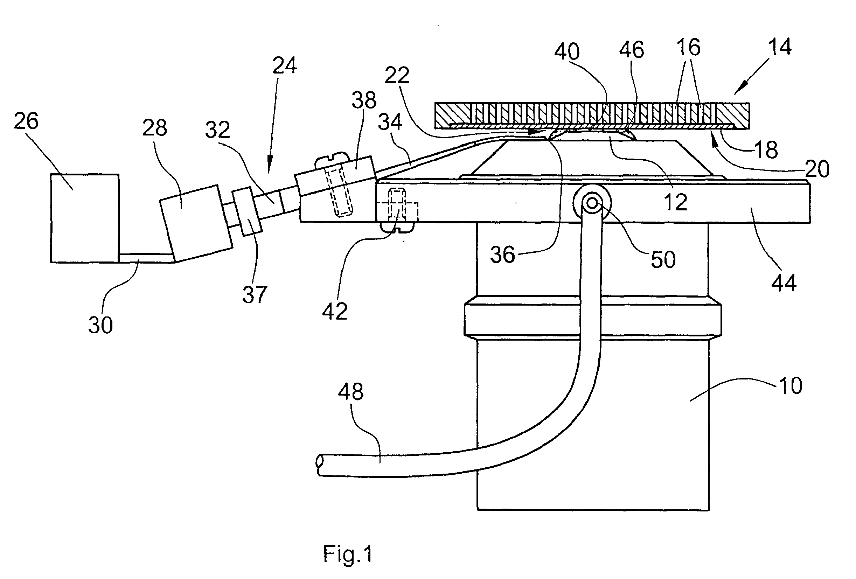

- Fig. 1: eine schematische Seitenansicht der erfindungsgemäßen Vorrichtung und

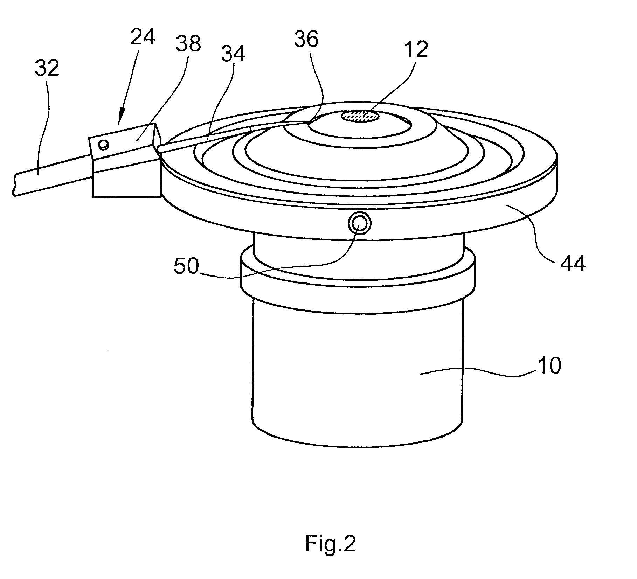

- Fig. 2: eine schematische perspektivische Ansicht der in Fig. 1 dargestellten Vorrichtung.

Die erfindungsgemäße Vorrichtung weist in der dargestellten Ausführungsform ein Objektiv 10 mit einer vertikal nach oben weisenden Austrittslinse 12 auf. Gegenüber der Austrittslinse 12 ist ein Probenträger 14 angeordnet, der mehrere Proben 16 aufnimmt. Die Unterseite des Probenträgers 14 ist durch eine transparente Bodenträgerwand 18, bei der es sich im dargestellten Ausführungsbeispiel um einen Probenträgerboden handelt, verschlossen. Mit Hilfe des Objektivs 10 werden in den einzelnen Proben 16 Untersuchungen durchgeführt.

Die Austrittslinse 12 des Objektivs 10, bei der es sich beispielsweise auch um ein Schutzglas oder eine Vorsatzlinse handeln kann, ist gegenüber einer Außenfläche des Probenträgers 10 in einem Abstand angeordnet. Hierdurch ist zwischen der Austrittslinse 12 und der Außenfläche 20 der Probenträgerwand 18 ein Spalt 22 ausgebildet.

Mit Hilfe einer Zuführeinrichtung 24 wird in den Spalt 22 ein in einem Reservoir 26 vorgesehenes Immersionsmedium zugeführt. Hierzu weist die Zuführeinrichtung eine Pumpe 28 auf, die über einen Schlauch 30 mit dem Reservoir 26 verbunden ist. An die Pumpe 28 ist ein Schlauch oder Rohr 32 angeschlossen, der zu einem Zuführrohr 34 führt. Das Ende des Zuführrohrs 34 ist ähnlich einer Pipettenspitze ausgebildet und weist eine abgeflachte Austrittsöffnung 36 auf. Um ein Absinken der Flüssigkeitssäule zu vermeiden, ist ein Ventil 37 vorgesehen.

Um den Abstand der Austrittsöffnung 36 des Zuführrohrs 34 bzgl. der Austrittslinse 12 einstellen zu können, ist das Rohr 32 in einer Klemmeinrichtung 38 in Längsrichtung verschiebbar gehalten. Durch die Klemmeinrichtung 38 kann somit die Lage der Austrittsöffnung 36 relativ zu der Austrittslinse 12 eingestellt werden. Hierzu kann die Klemmeinrichtung 38 beispielsweise auch um eine senkrecht zur Zeichenebene verlaufende Achse kippbar angeordnet sein. Die Austrittsöffnung 36 des Zuführrohrs 34 ist im dargestellten Ausführungsbeispiel unterhalb eines Maximalpunkts 40 der Austrittslinse 12 angeordnet. Die Austrittsöffnung 36 ist somit gegenüber dem Maximalpunkt 40 der Austrittslinse 12 in Richtung des Objektivs 10 versetzt angeordnet.

Die Klemmeinrichtung 38 ist mittels einer Schraube 42 an einer das Objektiv 10 umgebenden kragenförmigen Auffangeinrichtung 44 gehalten. Über die Schraube 42 kann eine weitere Justage der Klemmeinrichtung 38 und damit der Austrittsöffnung 36 des Zuführrohrs 34 erfolgen. Die Auffangeinrichtung 44 dient zum Auffangen von zwischen der Autrittslinse 12 und dem Probenträger 14 vorgesehenen Immersionsmedium 46, sofern über die Zuführeinrichtung 24 beispielsweise zuviel oder kontinuierlich Immersionsmedium dem Spalt 22 zugeführt wird.

Die kragenförmige Auffangeinrichtung 44 weist eine mit einem Schlauch 48 verbundene Abführöffnung 50 auf. Mit dem Schlauch 48 kann ferner eine Absaugeinrichtung verbunden sein.

## Patentansprüche

1. Vorrichtung zur Untersuchung chemischer und/oder biologischer Proben, mit
einem Probenträger (14) zur Aufnahme der Proben (16),
einem Objektiv (10) zur Beobachtung der Proben (16) durch eine Probenträgerwand (18), wobei zwischen einer Außenfläche (20) der Probenträgerwand (18) und einer Austrittslinse (12) des Objektivs (10) ein Spalt (22) ausgebildet ist, und
einer Zuführeinrichtung (24) zum automatischen Zuführen von Immersionsmedium (46) zwischen die Außenfläche (20) der Probenträgerwand (18) und die Austrittslinse (12) des Objektivs (10),
**dadurch gekennzeichnet, dass** ein Objektivkopf des Objektivs (10) von einer Auffangeinrichtung (44) zur Aufnahme überschüssigen Immersionsmediums (46) umgeben ist, wobei die Auffangeinrichtung (44) auf herkömmliche Objektivköpfe aufsteckbar ist, und die Zuführeinrichtung (24) an der Auffangeinrichtung (44) befestigt ist.

2. Vorrichtung nach Anspruch 1, **dadurch gekennzeichnet, dass** die Zuführeinrichtung ein mit dem Objektiv (10) verbundenes Zuführrohr (34) aufweist.

3. Vorrichtung nach Anspruch 1 oder 2, **dadurch gekennzeichnet, dass** die Zuführeinrichtung (24) ein Zuführrohr (34) aufweist, dessen Austrittsöffnung (36) nahe der Austrittslinse (12) angeordnet ist.

4. Vorrichtung nach Anspruch 3, **dadurch gekennzeichnet, dass** die Austrittsöffnung (36) in einem Abstand von weniger als 15 mm, insbesondere weniger als 7 mm, zu der Austrittslinse angeordnet ist.

5. Vorrichtung nach einem der Ansprüche 1-4, **dadurch gekennzeichnet, dass** der Querschnitt der Austrittsöffnung (36) kleiner als 1 mm², insbesondere kleiner als 0,8 mm², ist.

6. Vorrichtung nach einem der Ansprüche 1-5, **dadurch gekennzeichnet, dass** die Austrittsöffnung (36) zu einem Maximalpunkt (40) der Austrittslinse (12) in Richtung des Objektivs (10) versetzt angeordnet ist.

7. Vorrichtung nach Anspruch 6, **dadurch gekennzeichnet, dass** zur Zufuhr des Immersionsmediums ein Vorratsbehälter (26) vorgesehen ist, der gegenüber der Austrittsöffnung (36) einen Niveauunterschied aufweist.

8. Vorrichtung nach Anspruch 6 oder 7, **dadurch gekennzeichnet, dass** zur Zufuhr des Immersionsmediums eine steuerbare Schlauchpumpe (28) vorgesehen ist.

9. Vorrichtung nach einem der Ansprüche 2-8, **dadurch gekennzeichnet, dass** mit dem Zuführrohr (34) ein steuerbares Ventil verbunden ist.

10. Vorrichtung nach Anspruch 1, **dadurch gekennzeichnet, dass** die Auffangeinrichtung (44) als Auffangrinne ausgebildet ist.

11. Vorrichtung nach Anspruch 1 oder 10, **dadurch gekennzeichnet, dass** die Auffangeinrichtung (44) eine Abführöffnung (50) aufweist.

12. Vorrichtung nach Anspruch 11, **dadurch gekennzeichnet, dass** die Abführöffnung mit einer Absaugeinrichtung verbunden ist.

13. Vorrichtung nach einem der Ansprüche 1-12, **dadurch gekennzeichnet, dass** der Spalt eine Breite von weniger als 1000 µm, vorzugsweise weniger als 500 µm, besonders bevorzugt weniger als 200 µm, aufweist.

14. Verwendung der Vorrichtung nach einem der Ansprüche 1-13 in einem konfokalen Mikroskop.

## Claims

1. An apparatus for examination of chemical and/or biological samples, comprising
a sample support (14) for receiving the samples (16),
an objective (10) for observation of the samples (16) through a sample support wall (18), wherein a gap (22) is formed between an outer surface (20) of the sample support wall (18) and an exit lens (12) of the objective (10), and
a supply device (24) for automatic supply of an immersion medium (46) between the outer surface (20) of the sample support wall (18) and the exit lens (12) of the objective (10),
**characterized in that** a lens head of the objective (10) is surrounded by a take-up means (44) for taking up excess immersion medium (46), the take-up means (44) being mountable to conventional lens heads, and that the supply device (24) is attached to the collecting means (44).

2. The apparatus according to claim 1, **characterized in that** the supply device comprises a supply tube (34) connected to the objective (10).

3. The apparatus according to claim 1 or 2, **characterized in that** the supply device (24) comprises a supply tube (34) having its exit opening (36) arranged close to the exit lens (12).

4. The apparatus according to claim 3, **characterized in that** the exit opening (36) is arranged at a distance of less than 15 mm, preferably less than 7 mm, from the exit lens.

5. The apparatus according to any one of claims 1-4, **characterized in that** the cross section of the exit opening (36) is less than 1 mm², preferably less than 0.8 mm².

6. The apparatus according to any one of claims 1-5, **characterized in that** the exit opening (36) is arranged at a displacement relative to a maximal point (40) of the exit lens (12) in the direction of the objective (10).

7. The apparatus according to claim 6, **characterized in that**, for supply of the immersion medium, a supply container (26) is provided which is arranged at a different level relative to the exit opening (36).

8. The apparatus according to claim 6 or 7, **characterized in that** a controllable hose pump (28) is provided for supply of the immersion medium.

9. The apparatus according to any one of claims 2-8, **characterized in that** the supply tube (34) has a controllable valve connected thereto.

10. The apparatus according to claim 1, **characterized in that** the take-up means (44) is formed as a take-up trough.

11. The apparatus according to claim 1 or 10, **characterized in that** the take-up means (44) comprises a drain opening (50).

12. The apparatus according to claim 11, **characterized in that** the drain opening is connected to a means for suctional removal.

13. The apparatus according to any one of claims 1-12, **characterized in that** the gap has a width of less than 1000 µm, preferably less than 500 µm and still more preferably less than 200 µm.

14. Use of the apparatus according to any one of claims 1-13 in a confocal microscope.

## Revendications

1. Dispositif pour l'analyse d'échantillons chimiques et/ou biologiques, comportant
un porte-échantillons (14) destiné à recevoir les échantillons (16),
un objectif (10) permettant d'observer les échantillons (16) à travers une paroi (18) du porte-échantillons, un interstice (22) étant ménagé entre une surface extérieure (20) de la paroi (18) du porte-échantillons et une lentille de sortie (12) de l'objectif (10), et
un système d'amenée (24) pour l'amenée automatique de fluide d'immersion (46) entre la surface extérieure (20) de la paroi (18) du porte-échantillons et la lentille de sortie (12) de l'objectif (10),
**caractérisé en ce qu'**une tête d'objectif de l'objectif (10) est entourée par un ensemble collecteur (44) destiné à recueillir du fluide d'immersion (46) en excès, l'ensemble collecteur (44) étant alors emboîtable sur des têtes d'objectif traditionnelles, et le système d'amenée (24) est fixé à l'ensemble collecteur (44).

2. Dispositif selon la revendication 1, **caractérisé en ce que** le système d'amenée présente un tuyau d'amenée (34) relié à l'objectif (10).

3. Dispositif selon la revendication 1 ou 2, **caractérisé en ce que** le système d'amenée (24) présente un tuyau d'amenée (34), dont l'ouverture de sortie (36) est disposée à proximité de la lentille de sortie (12).

4. Dispositif selon la revendication 3, **caractérisé en ce que** l'ouverture de sortie (36) est disposée à une distance de moins de 15 mm, en particulier de moins de 7 mm, de la lentille de sortie.

5. Dispositif selon l'une des revendications 1 à 4, **caractérisé en ce que** la section transversale de l'ouverture de sortie (36) est inférieure à 1 mm², en particulier inférieure à 0,8 mm².

6. Dispositif selon l'une des revendications 1 à 5, **caractérisé en ce que** l'ouverture de sortie (36) est dans une position décalée en direction de l'objectif (10) relativement à un point d'avancée maximum (40) de la lentille de sortie (12).

7. Dispositif selon la revendication 6, **caractérisé en ce que** pour l'amenée du fluide d'immersion, il est prévu un réservoir (26), qui présente une différence de niveau par rapport à l'ouverture de sortie (36).

8. Dispositif selon la revendication 6 ou 7, **caractérisé en ce que** pour l'amenée du fluide d'immersion, il est prévu une pompe tubulaire (28) pouvant être commandée.

9. Dispositif selon l'une des revendications 2 à 8, **caractérisé en ce qu'**une vanne pouvant être commandée est reliée au tuyau d'amenée (34).

10. Dispositif selon la revendication 1, **caractérisé en ce que** l'ensemble collecteur (44) est conçu sous forme d'une goulotte collectrice.

11. Dispositif selon la revendication 1 ou 10, **caractérisé en ce que** l'ensemble collecteur (44) présente une ouverture d'évacuation (50).

12. Dispositif selon la revendication 11, **caractérisé en ce que** l'ouverture d'évacuation est reliée à un système d'aspiration.

13. Dispositif selon l'une des revendications 1 à 12, **caractérisé en ce que** l'interstice présente une largeur de moins de 1 000 µm, de préférence de moins de 500 µm, de façon particulièrement préférée de moins de 200 µm.

14. Utilisation du dispositif selon l'une des revendications 1 à 13 dans un microscope à foyer commun.
